# FASCICULE DE BREVET EUROPEEN

(11) **EP 0 951 937 B1**
(45) Date de publication et mention de la délivrance du brevet: **14.12.2005**
(21) Numéro de dépôt: 99400875.3
(22) Date de dépôt: 09.04.1999
(51) Int. Cl.: B01J 20/18

(54) **Procédé d'abaissement du taux en alcool dans des boissons alcoolisées**
Verfahren zum Herabsetzen des Alkoholgehalts alkoholhaltiger Getränke
Process to lower the alcohol content of alcoholic beverages

(30) Priorité: 24.04.1998 FR 9805285
(43) Date de publication de la demande: 27.10.1999
(73) Titulaire: SOCIETE COOL S.a.r.l., 07800 La Voulte sur Rhône (FR)
(72) Inventeur: Berrebi, Georges, 26270 Cliousclat (FR)
(74) Mandataire: Benoist, François

(56) Documents cités:
- DD-A- 299 622
- PATENT ABSTRACTS OF JAPAN vol. 004, no. 089 (C-016), 25 juin 1980 & JP 55 051436 A (KUREHA CHEM IND CO LTD), 15 avril 1980
- PATENT ABSTRACTS OF JAPAN vol. 008, no. 102 (C-222), 12 mai 1984 & JP 59 016832 A (KOGYO GIJUTSUIN;OTHERS: 0J), 28 janvier 1984

## Description

L'invention se rapporte à un procédé d'abaissement du taux en alcool dans des boissons alcoolisées. Un procédé consistant à mettre en contact une bière naturellement alcoolisée avec une zéolithe hydrophobe est décrit dans la demande de brevet européen EP-A-486345.

Nous avons pu observer au cours de nos recherches que certaines substances microporeuses hydrophobes ont une très grande capacité d'absorption de l'alcool éthylique dans un mélange eau-alcool éthylique (comme par exemple les zéolithes du type Y à structure faujasite ou le charbon actif d'origine végétale de type NC 80 ; appelons ces substances : ESPECE I.

Si cedit mélange est du vin, il contient, en plus de l'eau (environ 80 à 85 % vol.) et d'alcool éthylique (environ 9 à 12 vol. ;), des centaines d'autres composés qui confèrent les caractéristiques gustatives et organoleptiques à cette boisson.

Cependant, quand une substance microporeuse a une grande capacité d'adsorption de l'alcool éthylique, elle est très peu sélective et elle adsorbe en même temps d'autres substances dont la présence est indispensable pour la qualité du goût du vin une fois désalcoolisé partiellement ou totalement.

Il existe d'autres substances microporeuses hydrophobes (zéolithes du type ZSM5 ou MZM41 ou SAPO ; appelons ces substances : ESPECE II qui sont très sélectives et ne retiennent quasiment que et seulement l'alcool éthylique sans retenir évidemment ni l'eau ni les autres molécules dont la masse moléculaire est supérieure à celle de l'alcool éthylique.

Ces dernière substances microporeuses hydrophobes jouent vraiment le rôle de tamis moléculaires et la taille de leurs pores ne permet le passage que des molécules d'alcool éthylique.

L'idée est donc d'abaisser le taux en alcool dans des boissons alcoolisées par mise en contact de ladite boisson avec un mélange des solides ESPECE I et ESPECE II. Plus particulièrement l'idée est d'associer dans un « complexe bidual» les caractéristiques intrinsèques de chacune de ces substances microporeuses hydrophobes. De manière pratique, il est possible de synthétiser des cristaux de l'ESPECE I et de l'obtenir sous forme de poudre de quelques microns de diamètre. Cette poudre une fois fabriquée est enrobée par une méthode physique du produite de l'ESPECE II. D'une manière préférée, l'ESPECE I se présente sous une forme pulvérulente, chaque grain étant enrobé par toute manière adéquate d'une couche de l'ESPECE II.

Le produit d'enrobage disposé en périphérie jouera le rôle de tamis moléculaire et ne laissera passer que l'alcool éthylique : ce dernier quand il aura traversé la couche du produit de l'ESPECE II viendra se faire absorber par le produit de l'ESPECE I qui le retiendra dans sa structure.

Ce complexe bidual possède, comme les exemples qui suivent le montrent, des caractéristiques impressionnantes.

A titre d'exemples :
Produit de l'ESPECE I : charbon actif type NC80 de la société PICA sous forme de grains concassés.
Produit de l'ESPECE II : zéolithe ZSM5 de la société ZEOLYST avec un rapport silice sur alumine supérieur à 100 déposé sous forme de bouillie sur les grains de charbon actif dans un bol tournant.

Proportions respectives environ 50 % poids de l'ESPECE I et 50 % poids de l'ESPECE II. Ces proportions ne sont pas limitatives.

Séchage à 120° C pendant 10 heures de l'ensemble, ceci à titre d'exemple.

Pour 100 grammes de ce complexe bidual séché, on a pu retenir, en quelques minutes, 50 g d'alcool éthylique. C'est-à-dire que pour une bouteille de vin rouge de « Côtes du Rhône » titrant 12 % volume d'alcool, nous avons pu servir 8 verres de vin ne contenant que 4,5 % volume d'alcool éthylique sans modifier le goût du vin en faisant passer le vin de la bouteille à travers un récipient filtre contenant ces 100 grammes de ce complexe bidual. Toute cette opération ne dure que quelques minutes.

Il est à noter que ces 8 verres contenant du vin ainsi partiellement désalcoolisé doivent être bus dans les 15 à 30 minutes qui suivent car le vin ainsi partiellement désalcoolisé n'est plus protégé contre les réactions d'oxydation à l'air.

Enfin, il faut signaler (voir notre demande de brevet européenne n° 98.400.139.6 que ces 100 grammes de complexe bidual peuvent être régénérés et être réutilisés une ou plusieurs fois. En effet, en chauffant cet ensemble filtrant pendant moins de 10 heures à une température voisine de 100° C dans un four de cuisinière domestique par exemple, tout l'alcool éthylique s'évapore et restitue au complexe bidual de nouveau toute sa propriété d'adsorption très sélective d'alcool éthylique dans des boissons alcoolisées comme le vin, la bière, le champagne voire certaines eaux de vie que l'on peut partiellement désalcooliser pour son confort personnel.

## Revendications

1. Matériau comportant un premier solide pulvérulent appelé « ESPECE I» choisi dans le groupe constitué par les zéolithes Y à structure faujasite et le charbon actif d'origine végétale de type NC 80, ledit solide étant enrobé d'un solide (différent du solide appelé « ESPECE I ») appelé ESPECE II, choisi dans le groupe constitué par les zéolithes de type ZSM5 ou MZM41 et de type SAPO.

2. Procédé d'abaissement de la teneur en alcool d'une boisson alcoolisée par mise en contact de ladite boisson avec un matériau selon la revendication 1.

## Patentansprüche

1. Material mit einem ersten pulverformigen Feststoff, der Komponente I genannt ist und ausgewählt ist aus der Gruppe, die gebildet ist von den Zeolithen Y mit faujasitischer Struktur und aktiver Kohle pflanzlichen Ursprungs der Sorte NC 80, wobei der Feststoff umgeben, ist von einem Feststoff (unterschiedlich zum Feststoff, der Komponente I genännt ist), der Komponente II genannt ist und ausgewählt ist aus der Gruppe, die gebildet ist von den Zeolithen der Sorte ZSM5 oder MZM41 und der Sorte SAPO.

2. Verfahren zum Absenken des Alkoholgehalts eines alkoholischen Getränks durch Kontaktieren dieses Getränks mit einem Material gemäß Anspruch, 1.

## Claims

1. Material that comprises a first powdered solid, that is called "TYPE I" and selected from the group consisting of Y zeolites with a faujasite structure and activated carbon of vegetable origin of NC80-type, whereby said solid is coated with a solid (different from the solid that is called "TYPE I") that is called TYPE II and selected from the group that consists of ZSM5- or MZM41-type zeolites and of SAPO-type zeolites.

2. Process for reducing the alcohol content of an alcoholic drink by bringing said drink into contact with a material according to claim 1.
